# EUROPEAN PATENT SPECIFICATION

(11) **EP 4 542 365 B1**
(45) Date of publication and mention of the grant of the patent: **07.10.2026**
(21) Application number: 24207088.6
(22) Date of filing: 17.10.2024
(51) Int. Cl.: G06F 3/06, G06F 9/38, G06F 12/0862

(54) **COMPUTING SYSTEM FOR PROCESSING COMMAND AND METHOD OF OPERATING THE SAME**
RECHNERSYSTEM ZUR VERARBEITUNG VON BEFEHLEN UND VERFAHREN ZUM BETRIEB DAVON
SYSTÈME INFORMATIQUE POUR TRAITER UNE COMMANDE ET SON PROCÉDÉ DE FONCTIONNEMENT

(30) Priority: 17.10.2023 KR 20230138381
(43) Date of publication of application: 23.04.2025
(73) Proprietor: SK Hynix Inc., Icheon-si, Gyeonggi-do 17336 (KR)
(72) Inventor: CHOI, Kyu Ho, 00000 Icheon-si, Gyeonggi-do (KR)
(74) Representative: Isarpatent

(56) References cited:
- US-A1- 2012 254 524
- US-A1- 2019 235 789
- US-A1- 2023 205 456

## Description

### TECHNICAL FIELD

Various embodiments of the disclosed technology generally relate to a semiconductor device, and more particularly to a computing system for processing a command and a method of operating the computing system.

### BACKGROUND

A storage device may be any type of computing hardware that is used for storing or extracting data files and objects. The storage device can operate under the control of another device such as a host device. The storage device may include a memory device that stores data, a buffer memory that temporarily stores data, and a memory controller that controls the memory device and the buffer memory.

US 2012/254524 A1 relates to a controller has a random write mode and a sequential write mode to which it transitions when receiving a start command.

### SUMMARY

Various embodiments of the disclosed technology relate to a computing system that is capable of reducing a command processing time and a method of operating the computing system.

The present invention is set out by the appended claims.

In an embodiment of the disclosed technology, a computing system may include a host device configured to generate a command including information associated with operations to be requested, the information including a first information portion associated with a first operation of the operations and a second information portion associated with a second operation to be requested subsequent to the first operation, and output the command including the first information portion and the second information portion, and a storage device configured to store data and in communication with the host device, wherein the storage device is configured to: receive the command from the host device, perform the first operation in response to the command, and perform part of the second operation based on the second information portion in the command.

In an embodiment of the disclosed technology, a method of operating a computing system may include generating, by a host device, a first command including information associated with operations to be requested, the information including a first information portion associated with a first operation and a second information portion associated with a second operation to be requested subsequent to the first operation, transmitting, by the host device, the first command to a storage device that stores data, performing, by the storage device, the first operation in response to the first command, performing, by the storage device, part of the second operation based on the second information portion in response to the first command, transmitting, by the storage device, a response to the first command to the host device, generating, by the host device, a second command including the second information portion, transmitting, by the host device, the second command to the storage device, and performing, by the storage device, a remaining operation other than the part of the second operation in response to the second command.

In an embodiment of the disclosed technology, a computing system may include a host device configured to: insert a plurality of second information portions associated with a plurality of second operations into a command for requesting a first operation, and output the command including the plurality of second information portions, and a storage device coupled in communication with the host device and configured to: receive the command from the host device, perform the first operation in response to the command, and perform respective parts of the plurality of second operations based on the plurality of second information portions in the command.

### BRIEF DESCRIPTION OF THE DRAWINGS

FIG. 1 is a diagram illustrating a computing system based on an embodiment of the disclosed technology.
FIG. 2 is a diagram illustrating a command that is transmitted and received between a host device and a storage device based on an embodiment of the disclosed technology.
FIG. 3 is a diagram illustrating an extra header segment based on an embodiment of the disclosed technology.
FIG. 4 is a flow diagram illustrating an example of performing part of a second operation to be requested after performing a first operation based on an embodiment of the disclosed technology.
FIGS. 5A and 5B are diagrams illustrating an example of performing a read operation to be requested after performing a first operation based on an embodiment of the disclosed technology.
FIGS. 6A and 6B are diagrams illustrating an example of performing a write operation to be requested after performing a first operation based on an embodiment of the disclosed technology.
FIG. 7 is a diagram illustrating an example of providing error information to a host device based on an embodiment of the disclosed technology.
FIG. 8 is a flow diagram illustrating an example of performing part of each of a plurality of second operations to be requested after performing a first operation based on an embodiment of the disclosed technology.
FIG. 9 is a flowchart illustrating a method of operating a computing system based on an embodiment of the disclosed technology.

### DETAILED DESCRIPTION

Specific structural features or functions for certain embodiments disclosed in this patent document are examples to describe certain implementations of the disclosed technology.

A host devices and a storage device can communicate using a data packet called a protocol information unit (PIU). A protocol information unit may be a type of data packet generated according to a predefined standard. The protocol information unit may include a basic header segment, transaction specific fields, and an extra header segment (EHS). The host device and the storage device may transmit data by including the data in the extra header segment of the protocol information unit.

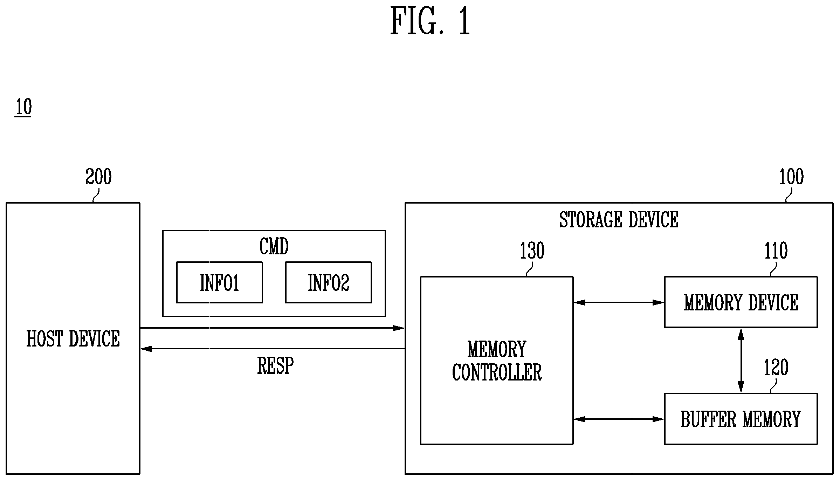

FIG. 1 is a diagram illustrating a computing system based on an embodiment of the disclosed technology.

Referring to FIG. 1, a computing system 10 may include a storage device 100 that stores data and a host device 200 in communication with the storage device 100 to access data stored in the storage device. The host device 200 may include one or more processors to perform operations and to write data to or to receive data from the storage device 100. In some implementations, the host device 200 may be in various device configurations, including a cellular phone, an MP3 player, a laptop computer, a desktop computer, a game machine, a TV, an in-vehicle infotainment system, etc. In an embodiment, the computing system 10 may be an electronic system configured to process various types of information, such as a mobile phone, a smart phone, an MP3 player, a laptop computer, a server computer, a desktop computer, a TV, a tablet PC, or an in-vehicle infotainment system.

In some implementations, the storage device 100 may store data under the control of the host device 200.

The storage device 100 may include a memory device 110, a buffer memory 120, and a memory controller 130, which controls the operation of the memory device 110 and the buffer memory 120.

The storage device 100 may be implemented as any one of various storage devices, such as a solid state drive (SSD), an MMC or eMMC type-multimedia card, a universal serial bus (USB) storage device, a universal flash storage (UFS) device, a peripheral component interconnection (PCI) or PCI express (PCI-E) card-type storage device, a compact flash (CF) card, a smart media card, and a memory stick, depending on a communication method between the storage device 100 and the host device 200. In some embodiments discussed in this patent document, the memory device 110 is a UFS device.

The storage device 100 may be manufactured in any one of various types of package forms. For example, the storage device 100 may be manufactured in any one of various types of package forms, such as package on package (POP), system in package (SIP), system on chip (SOC), multi-chip package (MCP), chip on board (COB), wafer-level fabricated package (WFP), and wafer-level stack package (WSP).

The memory device 110 may store data. The memory device 110 may include a plurality of memory blocks which store data. Each memory block may include a plurality of memory cells.

In an embodiment, the memory device 110 may include a plurality of zones. Each zone, which is a sequential area, may be a storage area in which pieces of data corresponding to successive addresses input from the host device 200 are stored. Each of the plurality of zones may include a plurality of memory blocks. In an embodiment, the numbers of memory blocks respectively included in the plurality of zones may be different from each other or identical to each other. Each zone may be a storage area corresponding to a logical address group composed of logical addresses input from the host device. Here, each of logical address groups may include successive logical addresses.

In an embodiment, the memory device 110 may be a nonvolatile memory in which data is retained even when power is interrupted. In some embodiments discussed in this patent document, the memory device 110 is a NAND flash memory.

In an embodiment, the memory device 110 may receive an internal command and an address from the memory controller 130. The internal command may be a command generated by the memory controller 130 to control the operation of the memory device 110 and the buffer memory 120. The memory device 110 may perform an operation indicated by the internal command for an area selected by the address. For example, the memory device 110 may perform a write operation (or a program operation), a read operation, and an erase operation.

In an embodiment, the memory device 110 may store a map table including mapping relationships between logical addresses, provided from the host device 200, and physical addresses. The map table may further include write pointer location information indicating the logical address of data to be stored in each zone. In some implementations, a portion of the map table may be loaded into the buffer memory 120 or a memory included in the memory controller 130.

The buffer memory 120 may temporarily store data. For example, the buffer memory 120 may temporarily store data provided from the host device 200 or data read from the memory device 110.

In an embodiment, the buffer memory 120 may be a volatile memory which stores data only when power is supplied and in which stored data is lost when the supply of power is interrupted. For example, examples of the buffer memory 120 may include a static random access memory (SRAM) and a dynamic random access memory (DRAM).

The memory controller 130 may control the overall operation of the storage device 100.

In an embodiment, the memory controller 130 may include a processor that runs firmware (FW), a memory that stores the firmware, a host interface that communicates with the host device 200, a memory interface that communicates with the memory device 110, etc.

When power is applied to the storage device 100, the memory controller 130 may run the firmware (FW). When the memory device 110 is a flash memory device, the firmware (FW) may include a host interface layer (HIL) which controls communication with the host device 200, a flash translation layer (FTL) which controls communication between the host device 200 and the memory device 110, and a flash interface layer (FIL) which controls communication with the memory device 110.

In an embodiment, the memory controller 130 may receive data and a logical block address (LBA) from the host device 200, and may translate the logical block address (LBA) into a physical block address (PBA) indicating the address of memory cells which are included in the memory device 110 and in which the data is to be stored. In some embodiments discussed in this patent document, the term "logical block address" can be used to indicate a logical address. In some embodiments discussed in this patent document, the term "physical block address" can be used to indicate a physical address.

In an embodiment, the host device 200 may provide a logical address that is indicated by the location of a write pointer in a zone to which the corresponding logical address belongs. In one example, the logical address provided by the host device 200 may be the starting logical address of an operation corresponding to the request of the host device 200.

In an embodiment, the memory controller 130 may load a portion of the map table stored in the memory device 110 into the buffer memory 120 or the memory included in the memory controller 130. The memory controller 130 may translate the logical address provided from the host device 200 into a physical address mapped to the corresponding logical address based on the loaded map table. Further, the memory controller 130 may update the map table by mapping the physical address to the logical address provided from the host device 200.

In an embodiment, the memory controller 130 may control the memory device 110 so that a write operation, a read operation or an erase operation is performed in response to the request of the host device 200. For example, the memory controller 130 may provide an internal command, an address, and data required to perform the write operation, the read operation or the erase operation to the memory device 110.

The host device 200 may control the overall operation of the computing system 10. In some embodiments discussed in this patent document, the host device 200 communicates with the storage device 100 through a UFS communication method.

In an embodiment, the host device 200 may generate a command CMD corresponding to an input/output request, and may transmit the generated command CMD to the storage device 100. Here, the input/output request may include a write request, a read request or an erase request.

In an embodiment, the host device 200 may generate a command CMD including information for requesting operations. For example, the host device 200 may generate a command CMD including a first information portion INFO1 for requesting a first operation and a second information portion INFO2 related to at least one of second operations or at least part of a second operation to be requested after the first operation is requested, and may output the generated command CMD including the first information portion INFO1 and the second information portion INFO2. In some implementations, the host device may transmit the command CMD including the first information portion INFO1 for requesting the first operation and the second information portion INFO2 for requesting part of the second operation that is the subsequent operation of the first operation. In one example, the second information portion INFO2 related to the second operation may include part of information for requesting the second operation. Here, when part of each of a plurality of second operations is requested, the command CMD may include a plurality of second information portions INFO2 related to the plurality of second operations, respectively.

In some implementations, the first operation and the second operation may be operations of the same type or different types.

In an embodiment, the storage device 100 may receive the command CMD from the host device 200, and may perform the first operation based on the first information portion INFO1 for requesting the first operation in response to the command CMD. Furthermore, the storage device 100 may perform part of the at least one second operation based on the second information portion INFO2 related to the at least one second operation included in the command CMD.

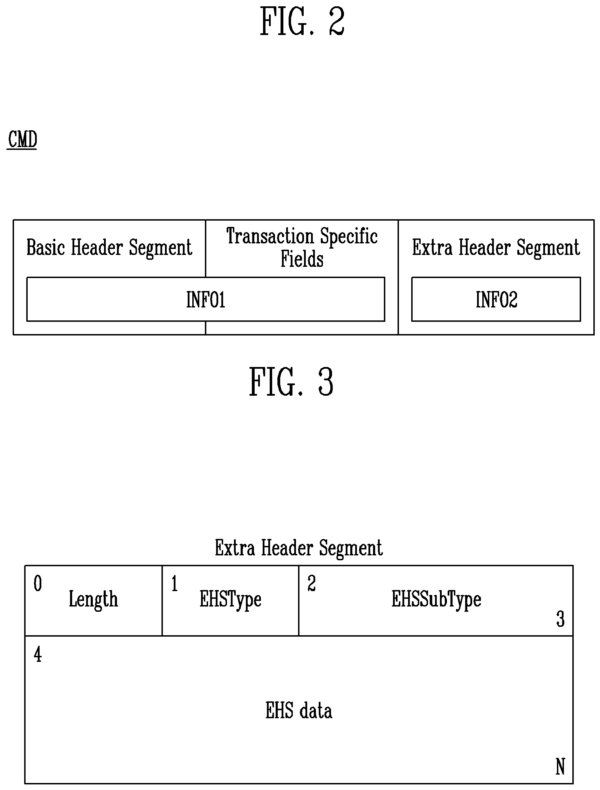

FIG. 2 is a diagram illustrating a command that is transmitted and received between a host device and a storage device based on an embodiment of the disclosed technology.

In an embodiment, the command CMD may be a command that is defined based on a small computer system interface (SCSI) standard. In another embodiment, the command CMD may be a command that is defined based on a UFS standard. For example, the command CMD may be composed of protocol information units (PIUs). The PIUs may include a command PIU, a response PIU, a data out PIU, a data in PIU, a ready to transfer PIU, a mode sense PIU, a mode select PIU, a read buffer PIU, a write buffer PIU, etc. depending on the operation desired to be performed by the host device 200 or the storage device 100.

As shown in FIG. 2, the command CMD is implemented using the command PIU. In an embodiment, the host device 200 may transmit the command CMD including a first information portion INFO1 for requesting a first operation and a second information portion INFO2 related to a second operation through the command PIU.

Referring to FIG. 2, the command CMD may include a basic header segment, transaction specific fields, and an extra header segment (EHS).

The basic header segment may include information that is used to enable the host device 200 or the storage device 100 to determine whether a target and a source, a function request, or extra data, and a parameter are required, and/or whether the extra data and the parameter are included in the command CMD, etc.

For example, the basic header segment may include a transaction type, flags, a logical unit number (LUN), a task tag, host device identification information, a command set type, the overall EHS length, etc.

The transaction type may be information that is used to define the usage of the data structure of the command CMD.

The flags may indicate the type of operation intended to be requested through the command CMD.

The LUN may represent a number for identifying the logical unit by which the host device 200 accesses the storage device 100. Here, the logical unit may represent a storage area that is addressable within the storage device. For example, the logical unit may represent at least one of a page, a memory block, a memory block group, a zone, a plane, or a die.

The task tag may represent information for identifying a request corresponding to the command CMD.

The command set type may represent the type of a command included in a command descriptor block (CDB).

The overall EHS length may represent the length of the extra header segment.

The transaction specific fields may include a data transmission length, a command descriptor block (CDB), etc.

The data transmission length may indicate the length of data to be transmitted from the host device 200 to the storage device 100 or from the storage device 100 to the host device 200 in response to a request of the command CMD. Here, the data transmission length may correspond to the length of a logical address.

The command descriptor block (CDB) may include information about various commands and addresses depending on the type of the CDB. For example, the CDB may include a logical address corresponding to the command CMD.

In an embodiment, the host device 200 may include the first information portion INFO1 for requesting the first operation in the basic header segment and the transaction specific fields.

When the basic header segment does not have enough space to store data, the extra header segment may be used to additionally store at least part of the data.

In an embodiment, the host device 200 may include the second information portion INFO2 related to the second operation in the extra header segment.

Although FIG. 2 shows that the host device 200 transmits the command CMD including both the information for requesting the first operation and the information related to the second operation through the command PIU, the disclosed technology is not limited thereto. For example, the host device 200 may transmit the command CMD including both the information for requesting the first operation and the information related to the second operation through another type of PIU.

FIG. 3 is a diagram illustrating an extra header segment based on an embodiment of the disclosed technology.

Referring to FIG. 3, the extra header segment may include a length field (Length), an EHS type field (EHSType), an EHS sub-type field (EHSSubType), and an EHS data field (EHS data).

The 0-th byte (0) of the extra header segment may be the length field. The length field (Length) may be a field having the total length of the extra header segment. In an embodiment, N may be '32*L-1'. L may be a value stored in the length field.

The first byte of the extra header segment may correspond to the EHS type field (EHSType). The EHS type field (EHSType) may designate the type of the extra header segment. In an embodiment, the host device 200 may store a specific value, indicating that the corresponding data is a type for requesting part of the second operation, in the EHS type field (EHSType). In this case, the storage device 100 may recognize that pieces of data included in the header segment are pieces of information for requesting part of the second operation through the EHS type field (EHSType).

The second and third bytes (2 and 3) of the extra header segment may correspond to the EHS sub-type field (EHSSubType).

The fourth to N-th bytes (4 to N) of the extra header segment may correspond to the EHS data field (EHS data). The EHS data field (EHS data) may include the information related to the second operation.

In an embodiment, the EHS data field (EHS data) may include flags related to the second operation, the LUN, the task tag, the host device identification information, the data transmission length, the logical address, various types of other CDBs, etc. For example, the host device 200 may include flags, indicating the type of the second operation such as a read operation or a write operation, in the EHS data field (EHS data). Further, the host device 200 may include a LUN intended to be accessed for the second operation in the EHS data field (EHS data). Furthermore, the host device 200 may include a task tag for identifying a request corresponding to the second operation in the EHS data field (EHS data). Furthermore, the host device 200 may include the identification information of the host device 200 in the EHS data field (EHS data). Furthermore, the host device 200 may include a data transmission length, indicating the length of data desired to be read during a read operation or the length of data desired to be stored during a write operation, in the EHS data field (EHS data). Furthermore, the host device 200 may include a logical address, indicating the location at which the second operation is to be performed, in the EHS data field (EHS data).

In some implementations, when there are a plurality of second operations, a plurality of extra header segments may be generated.

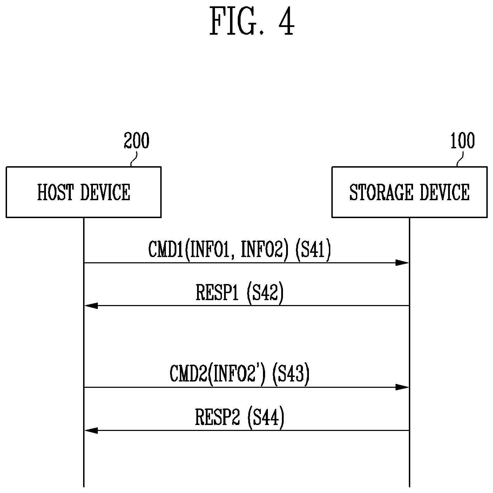

FIG. 4 is a flow diagram illustrating an example of performing part of a second operation to be requested after performing a first operation based on an embodiment of the disclosed technology. FIG. 4 is a diagram illustrating the case where there is one subsequent operation for the first operation.

Referring to FIG. 4, at S41, the host device 200 may transmit a first command CMD1, including the first information portion INFO1 for requesting the first operation and the second information portion INFO2 related to the second operation, to the storage device 100.

At S42, the storage device 100 may perform the first operation and part of the second operation, and then transmit a response RESP1 to the first command CMD1 to the host device 200. The response RESP1 may be a signal indicating that the first command CMD1 has been processed and/or has been executed, and may be implemented using a response PIU.

At S43, the host device 200 may transmit a second command CMD2 including an additional second information portion INFO2' for requesting the second operation to the storage device 100. For example, the additional second information portion INFO2' may be used to request the remaining second operation.

At S44, the storage device 100 may perform the remaining operation other than the part of the second operation already performed, and then transmit a response RESP2 to the second command CMD2 to the host device 200. In this case, because the part of the second operation has been performed in advance in response to the first command CMD1, the time it takes for the storage device 100 to process or execute the second command CMD2 may be reduced.

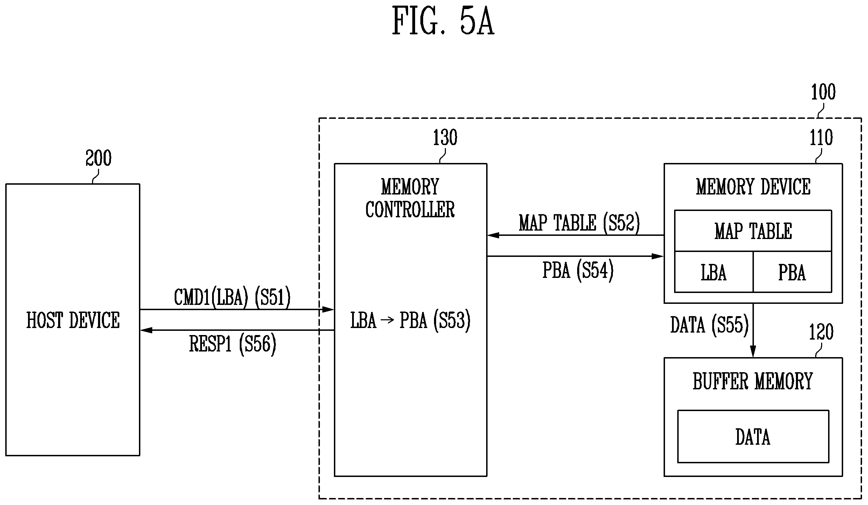

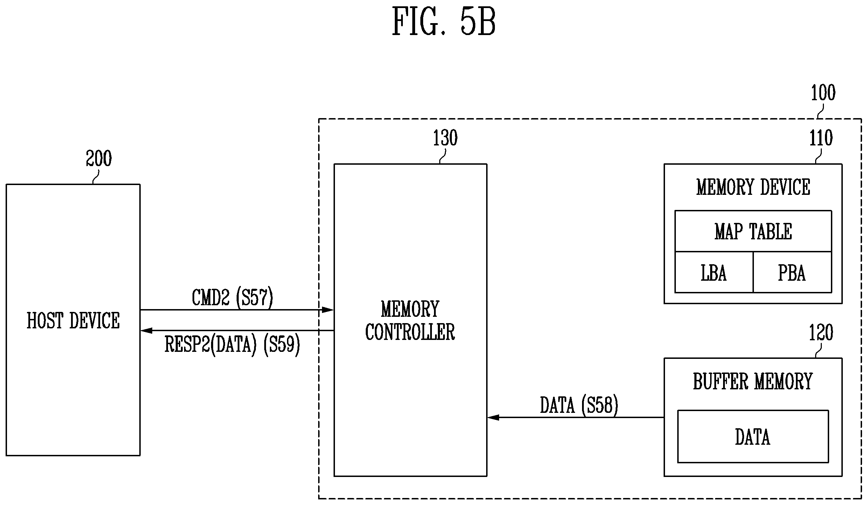

FIGS. 5A and 5B are diagrams illustrating an example of performing a read operation to be requested after performing a first operation based on an embodiment of the disclosed technology. FIGS. 5A and 5B are diagrams illustrating the implementation of individual operations illustrated in FIG. 4 when the second operation is a read operation. In some implementations, as shown in FIG. 5A, part of the second operation is performed, and as shown in FIG. 5B, the remaining operation other than the part of the second operation is performed.

Referring to FIGS. 4 and 5A, at S51, the host device 200 may transmit a first command CMD1, including the first information portion INFO1 for requesting the first operation and the second information portion INFO2 related to the second operation, to the memory controller 130. Here, the second information portion INFO2 related to the second operation may include a logical address (LBA) corresponding to the second operation.

After the first operation is performed based on the first information portion INFO1 for requesting the first operation, the memory controller 130 may obtain a portion of a map table from the memory device 110 at S52.

At S53, the memory controller 130 may obtain a physical address (PBA) mapped to the logical address (LBA) corresponding to the second operation from the map table based on the second information portion INFO2 related to the second operation. For example, the memory controller 130 may obtain the logical address (LBA) corresponding to the second operation from the second information portion INFO2 related to the second operation. The memory controller 130 may translate the logical address (LBA) corresponding to the second operation into the physical address (PBA) based on the map table. Further, when the second operation corresponds to a sequential read request, the memory controller 130 may identify a target zone for the second operation based on zone identification information, and may obtain the location information of a write pointer in the target zone based on the map table.

At S54, the memory controller 130 may provide the physical address (PBA), together with a read command, to the memory device 110.

At S55, the storage device 100 may read data DATA corresponding to the second operation from the memory device 110 based on the obtained physical address (PBA), and may store the read data in the buffer memory 120.

At S56, the memory controller 130 may transmit a response RESP1 corresponding to the first command CMD1 to the host device 200.

Referring to FIGS. 4 and 5B, at S57, the host device 200 may transmit a second command CMD2 including an additional second information portion INFO2' for requesting the second operation to the memory controller 130.

At S58, the memory controller 130 may obtain data DATA corresponding to the second operation from the buffer memory 120.

At S59, the memory controller 130 may transmit a response RESP2 corresponding to the second command CMD2 to the host device 200. Here, the response RESP2 may include data DATA corresponding to the second operation.

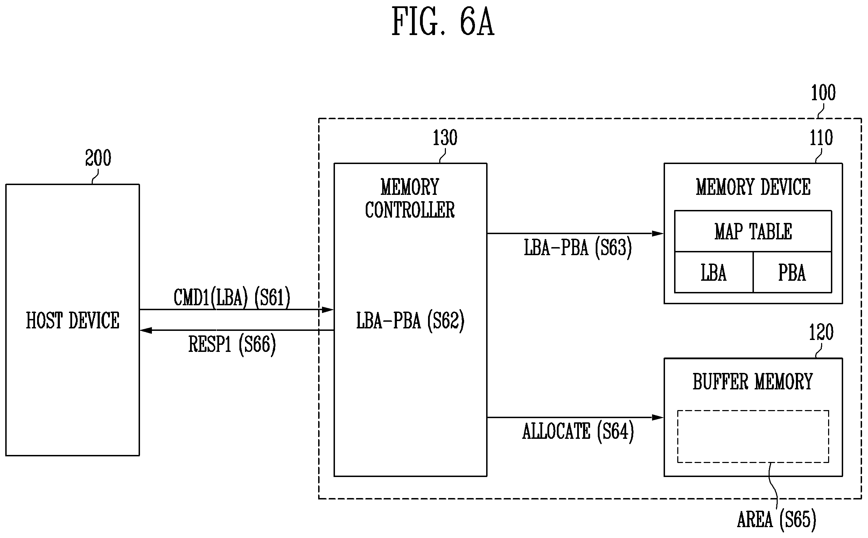

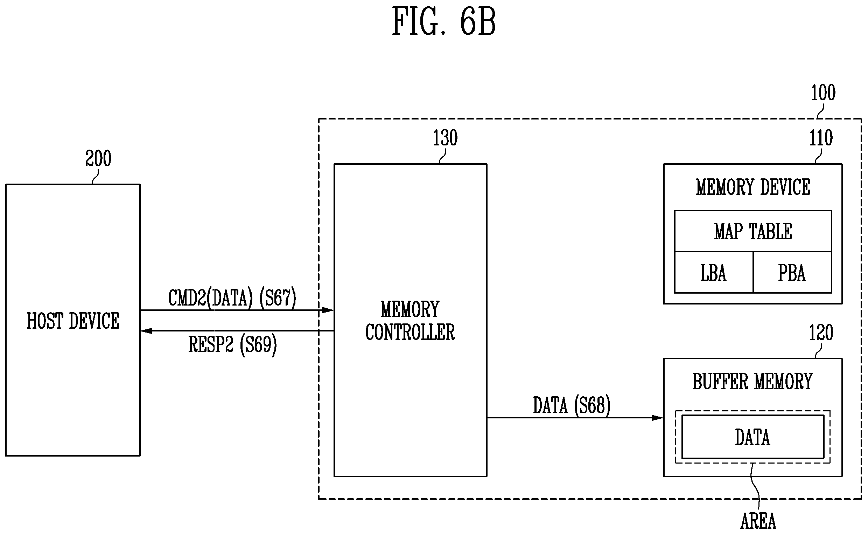

FIGS. 6A and 6B are diagrams illustrating an example of performing a write operation to be requested after performing a first operation based on an embodiment of the disclosed technology. FIGS. 6A and 6B illustrate the implementation of individual operations illustrated in FIG. 4 when the second operation is a write operation. In some implementations, as shown in FIG. 6A, part of the second operation is performed, and as shown in FIG. 6B, the remaining operation other than the part of the second operation is performed.

Referring to FIGS. 4 and 6A, at S61, the host device 200 may transmit a first command CMD1, including the first information portion INFO1 for requesting the first operation and the second information portion INFO2 related to the second operation, to the memory controller 130. Here, the second information portion INFO2 related to the second operation may include a logical address (LBA) corresponding to the second operation.

After the first operation is performed based on the first information portion INFO1 for requesting the first operation, the memory controller 130 may update the map table by mapping the physical address (PBA) to the logical address (LBA) corresponding to the second operation at S62. When the second operation corresponds to a sequential write request, the memory controller 130 may identify a target zone for the second operation based on zone identification information, and may update write pointer location information corresponding to the second operation in the map table.

At S63, the memory controller 130 may transmit mapping information LBA-PBA between the logical address (LBA) and the physical address (PBA) to the memory device 110.

At S64, the memory controller 130 may control the buffer memory 120 to allocate a buffer area AREA in which data corresponding to the second operation is to be temporarily stored in the buffer memory 120.

At S65, the buffer memory 120 may allocate the buffer area AREA under the control of the memory controller 130.

At S66, the memory controller 130 may transmit a response RESP1 corresponding to the first command CMD1 to the host device 200.

Referring to FIGS. 4 and 6B, at S67, the host device 200 may transmit a second command CMD2 including an additional second information portion INFO2' for requesting the second operation to the memory controller 130. Here, the second command may include write data DATA corresponding to the second command CMD2.

At S68, the memory controller 130 may control the buffer memory 120 to store the write data DATA in the pre-allocated area AREA in the buffer memory 120.

At S69, the memory controller 130 may transmit a response RESP2 corresponding to the second command CMD2 to the host device 200.

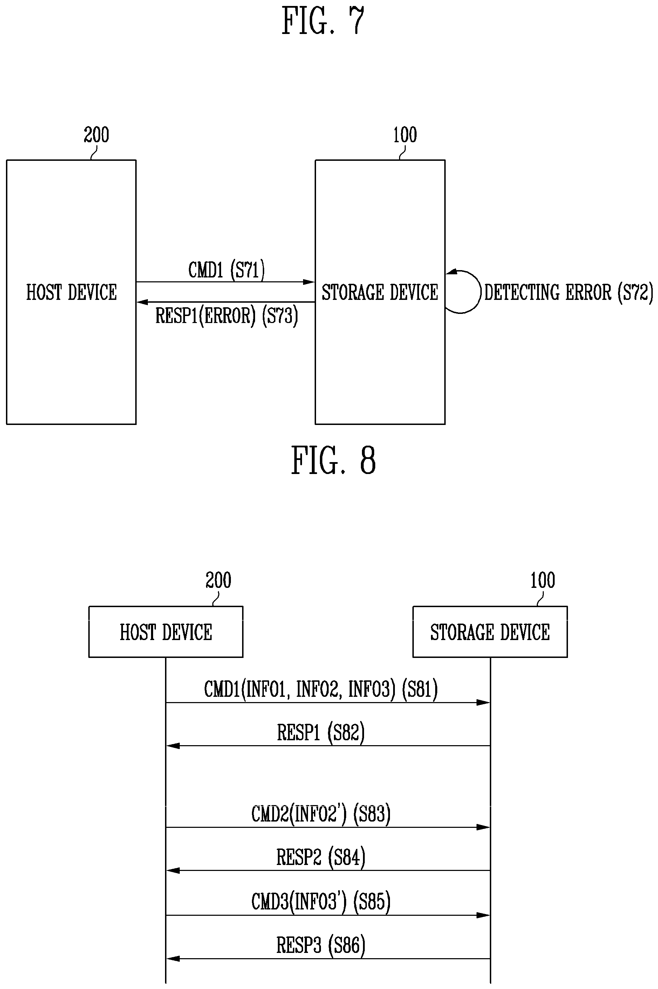

FIG. 7 is a diagram illustrating an example of providing error information to a host device based on an embodiment of the disclosed technology.

Referring to FIGS. 4 and 7, at S71, the host device 200 may transmit a first command CMD1, including the first information portion INFO1 for requesting the first operation and the second information portion INFO2 related to the second operation, to the storage device 100.

After the first operation is performed based on the first information portion INFO1 for requesting the first operation, the storage device 100 may determine whether an error is expected to occur during the second operation based on the second information portion INFO2 related to the second operation. When it is determined that an error is expected to occur, the storage device 100 may transmit information about the error to the host device 200.

For example, at S72, the storage device 100 may detect an error based on the second information portion INFO2 related to the second operation.

Here, when data is erroneous or invalid, e.g., when flags, a LUN, a task tag, host device identification information, data transmission length, and a logical address, which are included in the second information portion INFO2 related to the second operation are erroneous or invalid, the storage device 100 may detect errors. Further, when a read fail occurs while part of the second operation is being performed, the storage device 100 may detect an error.

At S73, the storage device 100 may transmit a response RESP1 corresponding to the first command CMD1 to the host device 200. Here, the response RESP1 may include information about the error. Thereafter, in an embodiment, the host device 200 may correct erroneous data included in the second information portion INFO2 related to the second operation based on the information about the error, and may transmit an additional second information portion INFO2' for requesting the second operation, including the corrected data, to the storage device 100 when requesting the second operation.

FIG. 8 is a flow diagram illustrating an example of performing part of each of a plurality of second operations to be requested after performing a first operation based on an embodiment of the disclosed technology. FIG. 8 is a diagram illustrating the case where there are a plurality of subsequent operations for the first operation. Hereinafter, a description will be made on the assumption that a first operation, a second operation, and a third operation are sequentially performed.

Referring to FIG. 8, at S81, the host device 200 may transmit a first command CMD1 including first information portion INFO1 for requesting the first operation, a second information portion INFO2 related to the second operation, and information INFO3 related to the third operation to the storage device 100.

At S82, the storage device 100 may perform the first operation, part of the second operation, and part of the third operation, and then transmit a response RESP1 to the first command CMD1 to the host device 200.

Thereafter, the host device 200 may generate a plurality of commands for requesting a plurality of subsequent operations, respectively, and may sequentially transmit the plurality of commands to the storage device 100. In addition, the storage device 100 may sequentially perform the remaining operations, other than parts of respective subsequent operations, among the plurality of subsequent operations in response to the plurality of commands.

At S83, the host device 200 may transmit a second command CMD2 including an additional second information portion INFO2' for requesting the second operation to the storage device 100. For example, the additional second information portion INFO2' may be used to request the remaining second operation.

At S84, the storage device 100 may perform the remaining operation other than the part of the second operation, and then transmit a response RESP2 to the second command CMD2 to the host device 200. In this case, because the part of the second operation has been performed in advance in response to the first command CMD1, the time it take for the storage device 100 to process or execute the second command CMD2 may be reduced.

At S85, the host device 200 may transmit a third command CMD3 including information INFO3' for requesting the third operation to the storage device 100.

At S86, the storage device 100 may perform the remaining operation other than the part of the third operation, and then transmit a response RESP3 to the third command CMD3 to the host device 200. In this case, because the part of the third operation has been performed in advance in response to the first command CMD1, the time required by the storage device 100 to process the third command CMD3 may be reduced.

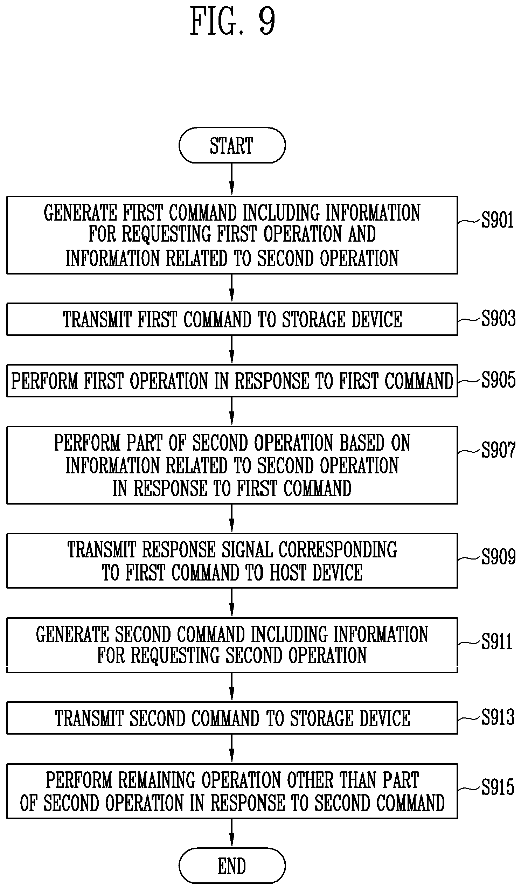

FIG. 9 is a flowchart illustrating a method of operating a computing system based on an embodiment of the disclosed technology. The method illustrated in FIG. 9 may be performed by, for example, the computing system 10 illustrated in FIG. 1.

Referring to FIG. 9, at S901, the computing system 10 may generate a first command including information for requesting a first operation and information related to a second operation to be requested after the first operation. For example, the computing system 10 may include the information related to the second operation in an extra header segment included in the first command.

At S903, the computing system 10 may transmit the first command to the storage device 100.

At S905, the computing system 10 may perform the first operation in response to the first command.

At S907, the computing system 10 may perform part of the second operation based on the information related to the second operation in response to the first command.

For example, when the second operation is a read operation, the computing system 10 may translate a logical address corresponding to the second operation into a physical address mapped to the logical address based on the information related to the second operation. Further, the computing system 10 may prefetch data corresponding to the second operation based on the physical address.

In an example, when the second operation is a write operation, the computing system 10 may map a physical address to a logical address corresponding to the second operation. In addition, the computing system 10 may allocate a buffer area in which data corresponding to the second operation is to be temporarily stored.

At S909, the computing system 10 may transmit a response signal corresponding to the first command to the host device 200.

At S911, the computing system 10 may generate a second command including information for requesting the second operation.

At S913, the computing system 10 may transmit the second command to the storage device 100.

At S915, the computing system 10 may perform the remaining operation other than part of the second operation in response to the second command.

In an example, when the second operation is a read operation, the computing system 10 may transmit the prefetched data to the host device 200.

In an example, when the second operation is a write operation, the storage device 100 of the computing system 10 may receive data corresponding to the second operation from the host device 200, and may store the data corresponding to the second operation in the pre-allocated buffer area. Furthermore, when the storage device 100 receives a flush request from the host device 200, the storage device 100 may store the data corresponding to the second operation, stored in the buffer area, in a storage area corresponding to the pre-mapped physical address.

In this way, the command processing speed of a computing system implemented based on some embodiments of the disclosed technology can be improved.

The embodiments and implementations disclosed above are examples only, and thus various enhancements and variations to the disclosed embodiments and implementations and other embodiments and implementations can be made based on what is described and illustrated in this patent document

## Claims

1. A computing system (10), comprising:
a host device (200) configured to: generate a first command including information associated with operations to be requested, the information including a first information portion associated with a first operation of the operations and a second information portion associated with a second operation to be requested subsequent to the first operation, and a second command including an additional second information portion associated with a remaining second operation; and output the first command including the first information portion and the second information portion; and
a storage device (100) configured to store data and in communication with the host device (200), wherein the storage device is configured to: receive the first command from the host device (200); perform the first operation in response to the first command; perform part of the second operation based on the second information portion in the command; determine whether an error is expected to occur during the second operation based on the second information portion; and transmit information about the error to the host device before receiving the second command from the host device, upon determination that the error is expected to occur.

2. The computing system (10) according to claim 1, wherein:
the first command comprises a basic header segment, transaction specific fields, and an extra header segment, EHS; and
the host device (200) is configured to include the first information in the basic header segment and the transaction specific fields and include the second information in the extra header segment.

3. The computing system (10) according to claim 1, wherein the second information portion includes one or more of a logical address corresponding to the second operation, a length of the logical address, a type of the second operation, identification information of a storage area desired to be accessed during the second operation, or identification information of the host device (200).

4. The computing system (10) according to claim 3, wherein the storage device (100) comprises:
a memory device (110) configured to store a map table including mapping relationships between logical addresses provided from the host device (200) and physical addresses of the memory device (110); and
a buffer memory (120) configured to temporarily store data provided from the host device or data read from the memory device (110).

5. The computing system (10) according to claim 4, wherein, in a case that the second operation is a read operation, the storage device (100) obtains a physical address mapped to a logical address corresponding to the second operation from the map table based on the second information portion.

6. The computing system (10) according to claim 5, wherein the storage device (100) is configured to read data corresponding to the second operation from the memory device (110) based on the obtained physical address and store the read data in the buffer memory (120).

7. The computing system (10) according to claim 4, wherein, in a case that the second operation is a write operation, the storage device (100) updates the map table by mapping a physical address to a logical address corresponding to the second operation.

8. The computing system (10) according to claim 4, wherein, in a case that the second operation is a write operation, the storage device (100) allocates a buffer area in which data corresponding to the second operation is to be temporarily stored in the buffer memory (120).

9. The computing system (10) according to claim 1, wherein the storage device (100) is configured to perform the first operation and the part of the second operation and then transmit a response to the command to the host device (200).

10. A method of operating a computing system (10), comprising:
generating (S901), by a host device (200), a first command including information associated with operations to be requested, the information including a first information portion associated with a first operation and a second information portion associated with a second operation to be requested subsequent to the first operation;
transmitting (S903), by the host device (200), the first command to a storage device that stores data;
performing (S905), by the storage device (100), the first operation in response to the first command;
performing (S907), by the storage device (100), part of the second operation based on the second information portion in response to the first command;
transmitting (S909), by the storage device (100), a response to the first command to the host device (200);
generating (S911), by the host device (200), a second command including the second information portion;
transmitting (S913), by the host device (200), the second command to the storage device (100); and
performing (S915), by the storage device (100), a remaining operation other than the part of the second operation in response to the second command,
wherein transmitting the response to the first command to the host device (200) comprises:
determining, by the storage device (100), whether an error is expected to occur during the second operation based on the second information portion; and
transmitting, by the storage device (100), information about the error to the host device before receiving the second command from the host device (200), upon determination that the error is expected to occur.

11. The method according to claim 10, wherein generating the first command comprises:
inserting the second information portion into an extra header segment, EHS, included in the first command.

12. The method according to claim 10, wherein performing the part of the second operation comprises:
translating a logical address corresponding to the second operation into a physical address mapped to the logical address based on the second information portion in response to the second operation that is a read operation; and
prefetching data corresponding to the second operation based on the physical address.

13. The method according to claim 12, wherein performing the remaining operation comprises:
transmitting the prefetched data to the host device (200).

14. The method according to claim 10, wherein performing the part of the second operation comprises:
mapping a physical address to a logical address corresponding to the second operation in response to the second operation in a case that the second operation is a write operation; and
allocating a buffer area in which data corresponding to the second operation is temporarily stored.

15. The method according to claim 14, wherein performing the remaining operation comprises:
receiving the data corresponding to the second operation from the host device (200);
storing the data corresponding to the second operation in the buffer area; and
storing the data corresponding to the second operation, stored in the buffer area, into a storage area corresponding to the physical address in response to a flush request of the host device (200).

16. A computing system (10), comprising:
a host device (200) configured to: insert a plurality of second information portions associated with a plurality of second operations into a command for requesting a first operation; and output the command including the plurality of second information portions; and
a storage device (100) coupled in communication with the host device (200) and configured to: receive the command from the host device (200); perform the first operation in response to the command; and perform respective parts of the plurality of second operations based on the plurality of second information portions in the command;
determine whether an error is expected to occur during the plurality of second operations based on the plurality of second information portions; and
transmit information about the error to the host device before receiving a plurality of commands for requesting the plurality of second operations from the host device, upon determination that the error is expected to occur.

17. The computing system (10) according to claim 16, wherein the host device (200) is configured to: receive a response to the command from the storage device (100); generate the plurality of commands, respectively; and sequentially transmit the plurality of commands to the storage device (100).

18. The computing system (10) according to claim 17, wherein the storage device (100) is configured to sequentially perform remaining operations, other than the respective parts of the plurality of second operations, among the plurality of second operations in response to the plurality of commands.

## Patentansprüche

1. Rechnersystem (10), umfassend:
eine Host-Vorrichtung (200), die eingerichtet ist zum: Generieren eines ersten Befehls, der Informationen enthält, die mit anzufordernden Operationen verknüpft sind, wobei die Informationen einen ersten Informationsabschnitt, der mit einer ersten Operation der Operationen verknüpft ist, und einen zweiten Informationsabschnitt, der mit einer zweiten, im Anschluss an die erste Operation anzufordernden Operation verknüpft ist, umfassen, und eines zweiten Befehls, der einen zusätzlichen zweiten Informationsabschnitt enthält, der mit einer verbleibenden zweiten Operation verknüpft ist; und Ausgeben des ersten Befehls, der den ersten Informationsabschnitt und den zweiten Informationsabschnitt enthält; und
eine Speichervorrichtung (100), die dazu eingerichtet ist, Daten zu speichern, und in Kommunikation mit der Host-Vorrichtung (200), wobei die Speichervorrichtung eingerichtet ist zum: Empfangen des ersten Befehls von der Host-Vorrichtung (200); Durchführen der ersten Operation in Reaktion auf den ersten Befehl; Durchführen eines Teils der zweiten Operation auf der Grundlage des zweiten Informationsabschnitts in dem Befehl; Bestimmen, ob während der zweiten Operation das Auftreten eines Fehlers erwartet wird, auf der Grundlage des zweiten Informationsabschnitts; und Senden von Informationen über den Fehler an die Host-Vorrichtung vor dem Empfangen des zweiten Befehls von der Host-Vorrichtung, nach einer Bestimmung, dass das Auftreten eines Fehlers erwartet wird.

2. Rechnersystem (10) nach Anspruch 1, wobei:
der erste Befehl ein Basis-Header-Segment, transaktionsspezifische Felder und ein Extra-Header-Segment (EHS) umfasst; und
das Host-Vorrichtung (200) dazu eingerichtet ist, die ersten Informationen in das Basis-Header-Segment und die transaktionsspezifischen Felder einzubinden und die zweiten Informationen in das Extra-Header-Segment einzubinden.

3. Rechnersystem (10) nach Anspruch 1, wobei der zweite Informationsabschnitt eines oder mehrere von einer der zweiten Operation entsprechenden logischen Adresse, einer Länge der logischen Adresse, einem Typ der zweiten Operation, Identifikationsinformationen eines Speicherbereichs, auf den während der zweiten Operation zugegriffen werden soll, und Identifikationsinformationen der Host-Vorrichtung (200) umfasst.

4. Rechnersystem (10) nach Anspruch 3, wobei die Speichervorrichtung (100) umfasst:
eine Speichervorrichtung (110), die dazu eingerichtet ist, eine Map-Tabelle zu speichern, die Mapping-Beziehungen zwischen von der Host-Vorrichtung (200) bereitgestellten logischen Adressen und physischen Adressen der Speichervorrichtung (110) enthält; und
einen Pufferspeicher (120), der dazu eingerichtet ist, Daten, die von der Host-Vorrichtung bereitgestellt wurden, oder Daten, die aus der Speichervorrichtung (110) gelesen wurden, vorübergehend zu speichern.

5. Rechnersystem (10) nach Anspruch 4, wobei in einem Fall, dass die zweite Operation eine Leseoperation ist, die Speichervorrichtung (100) eine physische Adresse, die auf eine logische Adresse abgebildet ist, die der zweiten Operation entspricht, aus der Map-Tabelle auf der Grundlage des zweiten Informationsabschnitts erlangt.

6. Rechnersystem (10) nach Anspruch 5, wobei die Speichervorrichtung (100) dazu eingerichtet ist, Daten, die der zweiten Operation entsprechen, aus der Speichervorrichtung (110) auf der Grundlage der erlangten physischen Adresse zu lesen und die gelesenen Daten in dem Pufferspeicher (120) zu speichern.

7. Rechnersystem (10) nach Anspruch 4, wobei in dem Fall, dass die zweite Operation eine Schreiboperation ist, die Speichervorrichtung (100) die Map-Tabelle aktualisiert, indem sie eine physische Adresse auf eine der zweiten Operation entsprechende logische Adresse abbildet.

8. Rechnersystem (10) nach Anspruch 4, wobei in dem Fall, dass die zweite Operation eine Schreiboperation ist, die Speichervorrichtung (100) einen Pufferbereich zuordnet, in dem Daten, die der zweiten Operation entsprechen, vorübergehend in dem Pufferspeicher (120) gespeichert werden sollen.

9. Rechnersystem (10) nach Anspruch 1, wobei die Speichervorrichtung (100) dazu eingerichtet ist, die erste Operation und den Teil der zweiten Operation durchzuführen und dann eine Antwort auf den Befehl an die Host-Vorrichtung (200) zu senden.

10. Verfahren zum Betreiben eines Rechnersystems (10), umfassend:
Generieren (S901), durch eine Host-Vorrichtung (200), eines ersten Befehls, der Informationen enthält, die mit anzufordernden Operationen verknüpft sind, wobei die Informationen einen ersten Informationsabschnitt, der mit einer ersten Operation verknüpft ist, und einen zweiten Informationsabschnitt, der mit einer im Anschluss an die erste Operation anzufordernden zweiten Operation verknüpft ist, umfassen;
Senden (S903), durch die Host-Vorrichtung (200), des ersten Befehls an eine Speichervorrichtung, die Daten speichert;
Durchführen (S905), durch die Speichervorrichtung (100), der ersten Operation in Reaktion auf den ersten Befehl;
Durchführen (S907), durch die Speichervorrichtung (100), eines Teils der zweiten Operation auf der Grundlage des zweiten Informationsabschnitts in Reaktion auf den ersten Befehl;
Senden (S909), durch die Speichervorrichtung (100), einer Antwort auf den ersten Befehl an die Host-Vorrichtung (200);
Generieren (S911), durch die Host-Vorrichtung (200), eines zweiten Befehls, der den zweiten Informationsabschnitt enthält;
Senden (S913), durch die Host-Vorrichtung (200), des zweiten Befehls an die Speichervorrichtung (100); und
Durchführen (S915), durch die Speichervorrichtung (100), einer verbleibenden Operation, die nicht der Teil der zweiten Operation ist, in Reaktion auf den zweiten Befehl,
wobei das Senden der Antwort auf den ersten Befehl an die Host-Vorrichtung (200) umfasst:
Bestimmen, durch die Speichervorrichtung (100), ob während der zweiten Operation das Auftreten eines Fehlers erwartet wird, auf der Grundlage des zweiten Informationsabschnitts; und
Senden, durch die Speichervorrichtung (100), von Informationen über den Fehler an die Host-Vorrichtung, bevor der zweite Befehl von der Host-Vorrichtung (200) empfangen wird, nach einer Bestimmung, dass das Auftreten des Fehlers erwartet wird.

11. Verfahren nach Anspruch 10, wobei das Generieren des ersten Befehls umfasst:
Einfügen des zweiten Informationsabschnitts in ein Extra-Header-Segment (EHS), das in dem ersten Befehl enthalten ist.

12. Verfahren nach Anspruch 10, wobei das Durchführen des Teils der zweiten Operation umfasst:
Übersetzen einer der zweiten Operation entsprechenden logischen Adresse in eine auf die logische Adresse abgebildete physische Adresse auf der Grundlage des zweiten Informationsabschnitts in Reaktion auf die zweite Operation, die eine Leseoperation ist; und
Vorabholen von Daten, die der zweiten Operation entsprechen, auf der Grundlage der physischen Adresse.

13. Verfahren nach Anspruch 12, wobei das Durchführen der verbleibenden Operation umfasst:
Senden der vorab geholten Daten an die Host-Vorrichtung (200).

14. Verfahren nach Anspruch 10, wobei das Durchführen des Teils der zweiten Operation umfasst:
Abbilden einer physischen Adresse auf eine der zweiten Operation entsprechende logische Adresse in Reaktion auf die zweite Operation in einem Fall, dass die zweite Operation eine Schreiboperation ist; und
Zuordnen eines Pufferbereichs, in dem Daten, die der zweiten Operation entsprechen, vorübergehend gespeichert werden.

15. Verfahren nach Anspruch 14, wobei das Durchführen der verbleibenden Operation umfasst:
Empfangen der Daten, die der zweiten Operation entsprechen, von der Host-Vorrichtung (200);
Speichern der Daten, die der zweiten Operation entsprechen, in dem Pufferbereich; und
Speichern der Daten, die der zweiten Operation entsprechen und in dem Pufferbereich gespeichert sind, in einem Speicherbereich, der der physischen Adresse entspricht, in Reaktion auf eine Flush-Anforderung der Host-Vorrichtung (200).

16. Rechnersystem (10), umfassend:
eine Host-Vorrichtung (200), die eingerichtet ist zum: Einfügen mehrerer zweiter Informationsabschnitte, die mit mehreren zweiten Operationen verknüpft sind, in einen Befehl zum Anfordern einer ersten Operation; und Ausgeben des Befehls einschließlich, der die mehreren zweiten Informationsabschnitten enthält; und
eine Speichervorrichtung (100), die in Kommunikation mit der Host-Vorrichtung (200) gekoppelt ist und eingerichtet ist zum: Empfangen des Befehls von der Host-Vorrichtung (200); Durchführen der ersten Operation in Reaktion auf den Befehl; und Durchführen jeweiliger Teile der mehreren zweiten Operationen auf der Grundlage der mehreren zweiten Informationsabschnitte in dem Befehl;
Bestimmen, ob während der mehreren zweiten Operationen das Auftreten eines Fehlers erwartet wird, auf der Grundlage der mehreren zweiten Informationsabschnitte; und
Senden von Informationen über den Fehler an die Host-Vorrichtung, bevor mehrere Befehle zum Anfordern der mehreren zweiten Operationen von der Host-Vorrichtung empfangen werden, nach einer Bestimmung, dass das Auftreten des Fehlers erwartet wird.

17. Rechnersystem (10) nach Anspruch 16, wobei die Host-Vorrichtung (200) eingerichtet ist zum: Empfangen einer Antwort auf den Befehl von der Speichervorrichtung (100); jeweiligen Generieren der mehreren Befehle; und Senden der mehreren Befehle nacheinander an die Speichervorrichtung (100).

18. Rechnersystem (10) nach Anspruch 17, wobei die Speichervorrichtung (100) dazu eingerichtet ist, in Reaktion auf die mehreren Befehle verbleibende Operationen, die nicht die jeweiligen Teile der mehreren zweiten Operationen sind, unter den mehreren zweiten Operationen nacheinander durchzuführen.

## Revendications

1. Système informatique (10), comprenant :
un dispositif hôte (200) configuré pour : générer une première commande comportant des informations associées à des opérations à demander, les informations comprenant une première portion d'informations associée à une première opération parmi les opérations, et une seconde portion d'informations associée à une seconde opération à demander après la première opération, et une seconde commande comprenant une seconde portion d'informations supplémentaire associée à une seconde opération restante ; et émettre la première commande comportant la première portion d'informations et la seconde portion d'informations ; et
un dispositif de stockage (100) configuré pour stocker des données et en communication avec le dispositif hôte (200), dans lequel le dispositif de stockage est configuré pour : recevoir la première commande provenant du dispositif hôte (200) ; exécuter la première opération en réponse à la première commande ; exécuter une partie de la seconde opération sur la base de la seconde portion d'informations dans la commande ; déterminer si l'occurrence d'une erreur est attendue pendant la seconde opération sur la base de la seconde portion d'informations ; et transmettre au dispositif hôte des informations concernant l'erreur avant de recevoir la seconde commande du dispositif hôte, lorsqu'il est déterminé que l'occurrence de l'erreur est attendue.

2. Système informatique (10) selon la revendication 1, dans lequel :
la première commande comprend un segment d'en-tête de base, des champs spécifiques à une transaction, et un segment d'en-tête supplémentaire, EHS ; et
le dispositif hôte (200) est configuré pour inclure les premières informations dans le segment d'en-tête de base et les champs spécifiques à une transaction, et inclure les secondes informations dans le segment d'en-tête supplémentaire.

3. Système informatique (10) selon la revendication 1, dans lequel la seconde portion d'informations comporte un ou plusieurs parmi une adresse logique correspondant à la seconde opération, une longueur de l'adresse logique, un type de la seconde opération, des informations d'identification d'une zone de stockage à laquelle un accès est souhaité pendant la seconde opération, ou des informations d'identification du dispositif hôte (200).

4. Système informatique (10) selon la revendication 3, dans lequel le dispositif de stockage (100) comprend :
un dispositif de mémoire (110) configuré pour stocker une table de correspondance comportant des relations de correspondance entre des adresses logiques fournies à partir du dispositif hôte (200) et des adresses physiques du dispositif de mémoire (110) ; et
une mémoire tampon (120) configurée pour stocker temporairement des données fournies à partir du dispositif hôte ou des données lues à partir du dispositif de mémoire (110).

5. Système informatique (10) selon la revendication 4, dans lequel, dans un cas où la seconde opération est une opération de lecture, le dispositif de stockage (100) obtient une adresse physique mise en correspondance avec une adresse logique correspondant à la seconde opération à partir de la table de correspondance, sur la base de la seconde portion d'informations.

6. Système informatique (10) selon la revendication 5, dans lequel le dispositif de stockage (100) est configuré pour lire des données correspondant à la seconde opération à partir du dispositif de mémoire (110) sur la base de l'adresse physique obtenue et stocker les données lues dans la mémoire tampon (120).

7. Système informatique (10) selon la revendication 4, dans lequel, dans un cas où la seconde opération est une opération d'écriture, le dispositif de stockage (100) met à jour la table de correspondance en mettant en correspondance une adresse physique avec une adresse logique correspondant à la seconde opération.

8. Système informatique (10) selon la revendication 4, dans lequel, dans un cas où la seconde opération est une opération d'écriture, le dispositif de stockage (100) alloue une zone de tampon dans laquelle des données correspondant à la seconde opération doivent être stockées temporairement dans la mémoire tampon (120).

9. Système informatique (10) selon la revendication 1, dans lequel le dispositif de stockage (100) est configuré pour exécuter la première opération et la partie de la seconde opération, et transmettre ensuite au dispositif hôte (200) une réponse à la commande.

10. Procédé d'exploitation d'un système informatique (10), comprenant de :
générer (S901), par un dispositif hôte (200), une première commande comportant des informations associées à des opérations à demander, les informations comportant une première portion d'informations associée à une première opération et une seconde portion d'informations associée à une seconde opération à demander après la première opération ;
transmettre (S903), par le dispositif hôte (200), la première commande à un dispositif de stockage qui stocke des données ;
exécuter (S905), par le dispositif de stockage (100), la première opération en réponse à la première commande ;
exécuter (S907), par le dispositif de stockage (100), une partie de la seconde opération sur la base de la seconde portion d'informations en réponse à la première commande ;
transmettre (S909) au dispositif hôte (200), par le dispositif de stockage (100), une réponse à la première commande ;
générer (S911), par le dispositif hôte (200), une seconde commande comportant la seconde portion d'informations ;
transmettre (S913), par le dispositif hôte (200), la seconde commande au dispositif de stockage (100) ; et
exécuter (S915), par le dispositif de stockage (100), une opération restante autre que la partie de la seconde opération en réponse à la seconde commande,
dans lequel la transmission au dispositif hôte (200) de la réponse à la première commande comprend de :
déterminer, par le dispositif de stockage (100), si l'occurrence d'une erreur est attendue pendant la seconde opération sur la base de la seconde portion d'informations ; et
transmettre au dispositif hôte, par le dispositif de stockage (100), des informations concernant l'erreur avant de recevoir la seconde commande provenant du dispositif hôte (200), lorsqu'il est déterminé que l'occurrence de l'erreur est attendue.

11. Procédé selon la revendication 10, dans lequel la génération de la première commande comprend de :
insérer la seconde portion d'informations dans un segment d'en-tête supplémentaire, EHS, inclus dans la première commande.

12. Procédé selon la revendication 10, dans lequel l'exécution de la partie de la seconde opération comprend de :
traduire une adresse logique correspondant à la seconde opération en une adresse physique mise en correspondance avec l'adresse logique sur la base de la seconde portion d'informations en réponse à la seconde opération qui est une opération de lecture ; et
pré-extraire des données correspondant à la seconde opération sur la base de l'adresse physique.

13. Procédé selon la revendication 12, dans lequel l'exécution de l'opération restante comprend de :
transmettre les données pré-extraites au dispositif hôte (200).

14. Procédé selon la revendication 10, dans lequel l'exécution de la partie de la seconde opération comprend de :
mettre en correspondance une adresse physique avec une adresse logique correspondant à la seconde opération en réponse à la seconde opération dans un cas où la seconde opération est une opération d'écriture ; et
allouer une zone de tampon dans laquelle des données correspondant à la seconde opération sont stockées temporairement.

15. Procédé selon la revendication 14, dans lequel l'exécution de l'opération restante comprend de :
recevoir les données correspondant à la seconde opération, provenant du dispositif hôte (200) ;
stocker les données correspondant à la seconde opération dans la zone de tampon ; et
stocker les données correspondant à la seconde opération, stockées dans la zone de tampon, dans une zone de stockage correspondant à l'adresse physique en réponse à une requête de vidage du dispositif hôte (200).

16. Système informatique (10), comprenant :
un dispositif hôte (200) configuré pour : insérer une pluralité de secondes portions d'informations associées à une pluralité de secondes opérations dans une commande destinée à demander une première opération ; et émettre la commande comportant la pluralité de secondes portions d'informations ; et
un dispositif de stockage (100) couplé en communication avec le dispositif hôte (200) et configuré pour : recevoir la commande provenant du dispositif hôte (200) ; exécuter la première opération en réponse à la commande ; et exécuter des parties respectives de la pluralité de secondes opérations sur la base de la pluralité de secondes portions d'informations dans la commande ;
déterminer si l'occurrence d'une erreur est attendue pendant la pluralité de secondes opérations, sur la base de la pluralité de secondes portions d'informations ; et
transmettre au dispositif hôte des informations concernant l'erreur avant de recevoir du dispositif hôte une pluralité de commandes destinées à demander la pluralité de secondes opérations, lorsqu'il est déterminé que l'occurrence de l'erreur est attendue.

17. Système informatique (10) selon la revendication 16, dans lequel le dispositif hôte (200) est configuré pour : recevoir du dispositif de stockage (100) une réponse à la commande ; générer la pluralité de commandes, respectivement ; et transmettre séquentiellement la pluralité de commandes au dispositif de stockage (100).

18. Système informatique (10) selon la revendication 17, dans lequel le dispositif de stockage (100) est configuré pour exécuter séquentiellement des opérations restantes, autres que les parties respectives de la pluralité de secondes opérations, parmi la pluralité de secondes opérations en réponse à la pluralité de commandes.
